**Europäisches Patentamt**

**European Patent Office**

**Office européen des brevets**

(11) Veröffentlichungsnummer: **0 616 559 B1**

# EUROPÄISCHE PATENTSCHRIFT

(45) Veröffentlichungstag der Patentschrift: **27.09.95**

(51) Int. Cl.6: **B21B 37/58**

(21) Anmeldenummer: **92923681.8**

(22) Anmeldetag: **26.11.92**

(86) Internationale Anmeldenummer:
**PCT/DE92/00989**

(87) Internationale Veröffentlichungsnummer:
**WO 93/11886 (24.06.93 93/15)**

(54) **WALZPLAN-BERECHNUNGSVERFAHREN.**

(30) Priorität: **13.12.91 DE 4141230**

(43) Veröffentlichungstag der Anmeldung:
**28.09.94 Patentblatt 94/39**

(45) Bekanntmachung des Hinweises auf die
Patenterteilung:
**27.09.95 Patentblatt 95/39**

(84) Benannte Vertragsstaaten:
**AT DE GB IT**

(56) Entgegenhaltungen:
**EP-A- 0 008 037**
**WO-A-92/14563**
**DE-A- 4 040 360**

(73) Patentinhaber: **SIEMENS AKTIENGESELL-SCHAFT**
**Wittelsbacherplatz 2**
**D-80333 München (DE)**

(72) Erfinder: **SÖRGEL, Günter**
**Zaunkönigweg 8**
**D-8500 Nürnberg 60 (DE)**

## Beschreibung

Die Erfindung betrifft ein Walzgerüst-Einstellverfahren zur Einstellung von Soll-Walzkraft und Soll-Walzspalt eines Walzgerüsts.

Ein derartiges Verfahren ist beispielsweise aus dem Siemens-Prospekt "Ideas for Steel-Prozeßautomatisierung von Warmbreitbandstraßen" bekannt. Gemäß diesem Stand der Technik erfolgt die Berechnung über komplexe Modellgleichungssysteme, wobei iterativ eine Anpassung von Modellparametern vorgenommen wird.

Aufgabe der vorliegenden Erfindung ist es, den Aufwand zur Berechnung von Soll-Walzkraft und Soll-Walzspalt zu minimieren.

Die Aufgabe wird dadurch gelöst, daß vor dem Walzen eines Bandes einer vorgegebenen Qualität aus einer erwarteten Materialhärte und einer aus einem Stichplan gegebenen relativen Soll- Stichabnahme unter Berücksichtigung von gerüstspezifischen und/oder materialspezifischen Walzkraft-Anpassungsgliedern unter Vereinfachung mittels einer einfachen arithmetischen Verknüpfung, also unter Benutzung nur der vier Grundrechenarten, die Soll-Walzkraft berechnet wird, sodann aus der durch die relative Soll-Stichabnahme gegebenen Soll-Auslaufdicke, dem Gerüstmodul und der Soll-Walzkraft unter Berücksichtigung einer Nullpunktkorrektur, einer Temperaturkorrektur sowie gegebenenfalls eines Walzspalt-Anpassungsgliedes unter Vereinfachung mittels einer einfachen arithmetischen Verknüpfung der Soll-Walzspalt berechnet wird und das Gerüst mit der Soll-Walzkraft und dem Soll-Walzspalt beaufschlagt wird.

Überraschend ergibt sich nämlich, daß trotz der Komplexität des Walzprozesses die Modellgleichungen mit hinreichender Genauigkeit linearisierbar sind. Dadurch wird das Modell zur Berechnung der Soll-Größen extrem einfach, da in die Modellgleichungen lediglich die vier Grundrechenarten eingehen, aber keine komplizierten Funktionen wie beispielsweise Logarithmen oder trigonometrische Funktionen.

Soll-Walzkraft und Soll-Walzspalt werden dabei vorteilhaft berechnet wie in den Ansprüchen 2 und 3 angegeben.

Wenn während des Walzens die Ist-Walzkraft, der Ist-Walzspalt und die Ist-Drehzahl des Gerüstes gemessen werden und aus der Ist-Drehzahl unter Berücksichtigung der Voreilung die Ist-Auslaufdicke des Bandes bestimmt wird und die Ist-Auslaufdicke mit der aufgrund des Modells unter Berücksichtigung der Ist-Walzkraft und des Ist-Walzspaltes erwarteten Ist-Auslaufdicke verglichen wird und aufgrund dieses Vergleichs ein Korrekturfaktor für einen der gerüstspezifischen Parameter, z.B. für die Nullpunktkorrektur, berechnet wird bzw. wenn während des Walzens die Ist-Walzkraft gemessen wird und die Ist-Stichabnahme ermittelt wird und aufgrund dieser Ist-Größen ein neues gerüstspezifisches Anpassungsglied ermittelt wird und durch den Vergleich des neu errechneten Anpassungsgliedes mit dem bisher verwendeten Anpassungsglied ein Korrekturfaktor für das Anpassungsglied ermittelt wird, können die Anpassungsglieder der Modellgleichungen selbsttätig korrigiert werden. Vorzugsweise werden die Korrekturfaktoren aber mit einem Vertrauensfaktor gewichtet, der die Genauigkeit der gemessenen Ist-Werte berücksichtigt, damit nicht einmalige Meßfehler in den Anpassungsgliedern "verewigt" werden.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Es zeigen:

FIG 1     ein schematisiertes Walzgerüst mit Angabe der wichtigsten walztechnischen Größen und

FIG 2     die Anbindung des Walzgerüsts an die Prozeßführung.

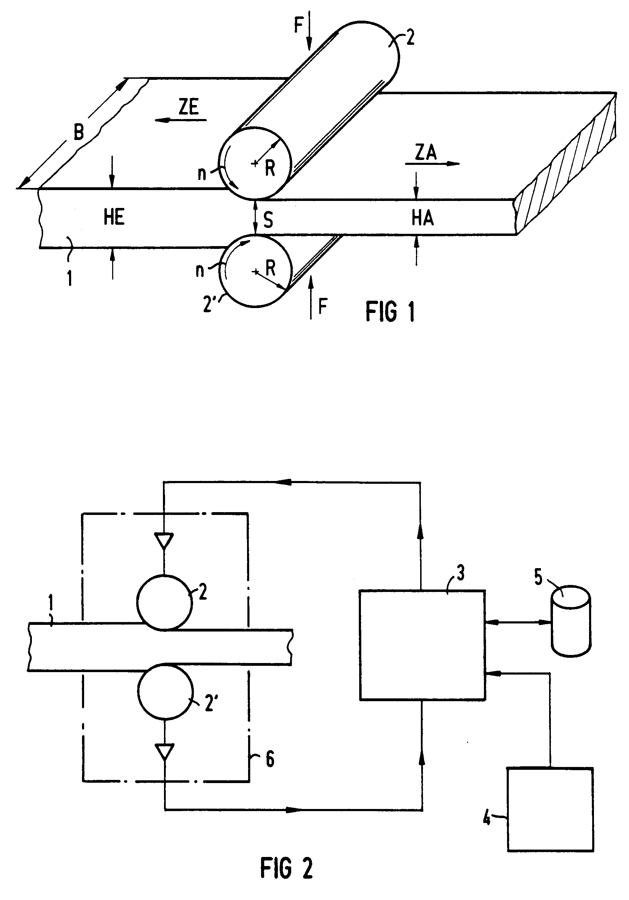

Gemäß Figur 1 soll ein Band 1, das eine Breite B besitzt und eingangsseitig mit dem Zug ZE und ausgangsseitig mit dem Zug ZA beaufschlagt ist, von der Einlaufdicke HE auf die Soll- Auslaufdicke HA* gewalzt werden. Hierzu werden die Walzen 2, 2', deren Radius R beträgt, mit der Walzkraft F und der Drehzahl n beaufschlagt, wobei ferner der Walzspalt S zwischen den Walzen 2, 2' derart eingestellt wird, daß sich auslaufseitig die Auslaufdicke HA* einstellt. Die Berechnung und Soll-Wertvorgabe für Walzkraft F und Walzspalt S ist das Thema der vorliegenden Erfindung.

Gemäß Figur 2 werden dem Sollwertrechner 3 vom Stichplanrechner 4 folgende Größen vorgegeben:

- die Soll-Einlaufdicke HE*,
- die Soll-Stichabnahme $\epsilon$*,
- die Breite B des zu walzenden Bandes
- die Temperatur T des Bandes und
- die eintritts- und austrittsseitigen Soll-Züge ZE*, ZA*.

Aus der Soll-Eintrittsdicke HE* und der Soll-Stichabnahme $\epsilon$* ergibt sich mittels der Gleichung

$$HA^* = (1 - \epsilon^*) \cdot HE^* \qquad (1)$$

die Soll-Auslaufdicke HA*. Weiterhin berechnet der Sollwertrechner 3 in an sich bekannter Weise aus der Breite B und der Temperatur T des Bandes, dem Radius R der Walzen, der Soll-Stichabnahme $\epsilon$*, den Soll-Zügen ZE*, ZA* sowie der Soll-Einlaufdicke HE* die erwartete Materialhärte MH*.

Zur Berechnung von Soll-Walzkraft F* und Soll-Walzspalt S* ruft der Sollwertrechner 3 aus dem Speicher 5 noch das gerüstspezifische Walzkraft-Anpassungsglied KFK, das materialspezifische Walzkraft-Anpassungsglied KMK sowie den Gerüstmodul CG, die Nullpunktkorrektur SO sowie die Temperaturkorrektur SOT ab. Die Glieder KFK und KMK können beispielsweise zunächst aus auf Erfahrungswerten beruhenden Tabellen abgelesen werden. Gleiches gilt für den Gerüstmodul CG sowie die Korrekturen SO und SOT.

Aus diesen Größen berechnet der Sollwertrechner 3 gemäß den Formeln

$$F^* = \epsilon^* \cdot MH^* \cdot KFK \cdot KMK \qquad (2)$$
$$\text{und } S^* = HA^* - CG \cdot F^* + SO + SOT + KSK \quad (3)$$

die Sollwerte $F^*$ und $S^*$ für Walzkraft und Walzspalt, wobei RFK und KSK Restfehlerkorrekturen sind, auf die später eingegangen werden wird. Das in Figur 2 schematisch dargestellte Gerüst 6 wird daraufhin, zumindest während der Anstichphase, mit diesen Sollwerten vorgesteuert, bis die Vorsteuerung nach Schließen eines nicht dargestellten Regelkreises in an sich bekannter Weise von einer Dickenregelung abgelöst wird.

Während des Walzens werden zumindest am Anfang laufend, z.B. alle 0,2 Sekunden, die Istwerte für Walzkraft F, Walzspalt S und Drehzahl n des Gerüsts 6 gemessen und gespeichert. Weil sich, z.B. aufgrund von Temperaturänderungen, die Materialhärte MH während des Walzens ändern kann, werden die Meßwertreihen zu drei Gruppen von je etwa 15 Meßwerten zusammengefaßt, wobei für jede Meßwertgruppe bzw. jedes dem entsprechende Bandsegment die Mittelwerte und Vertrauensintervalle, z.B. aufgrund der Varianz oder aufgrund einer Fehlerabschätzung, berechnet werden. Die im folgenden verwendeten Istwerte sind daher stets als Mittelwerte einer Gruppe zu verstehen.

Aus der Ist-Drehzahl n wird in Verbindung mit der bekannten Voreilung v und dem Radius R die Ist-Auslaufdicke HA in Form der Durchflußdicke bestimmt. Weiterhin wird die aufgrund des Modells und der Istgrößen F, S erwartete Auslaufdicke HA' gemäß der Gleichung

$$HA' = S + CG \cdot F - SO - SOT - KSK \qquad (4)$$

berechnet. Aus der Differenz wird dann gemäß der Formel

$$SO := SO + V \cdot (HA' - HA) \qquad (5)$$

ein korrigierter Wert für die Nullpunktkorrektur SO berechnet, wobei V ein Vertrauensfaktor ist, der die oben erwähnte Meßwertungenauigkeit berücksichtigt. V hat einen Wert von maximal 0,7, wenn alle Istwerte exakt gemessen werden können. Je unsicherer die Istwerte gemessen werden können, desto kleiner wird V. Im Extremfall kann V sogar zu 0 werden.

Weiterhin wird aufgrund der Formeln

$$KFK' = F/(\epsilon \cdot MH \cdot KMK) \qquad (6)$$
$$\text{und } KFK := KFK + V \cdot (KFK' - KFK) \qquad (7)$$

ein neuer, korrigierter Wert für das gerüstspezifische Walzkraft-Anpassungsglied KFK berechnet. Dieses Korrekturverfahren wird für jede der drei Gruppen von Meßwerten durchgeführt.

Wenn das Walzwerk mehrere Gerüste aufweist, wie diese beispielsweise bei einem kontinuierlichen Kaltwalzwerk der Fall ist, werden die Anpassungsglieder KFK, SO selbstverständlich für jedes Gerüst gesondert berechnet. Sodann wird das materialspezifische Walzkraft-Anpassungsglied KMK gemäß der Formel

$$KMK := KMK \cdot KFK_m \qquad (8)$$

korrigiert, wobei $KFK_m$ der Mittelwert der gerüstspezifischen Walzkraft-Anpassungsglieder KFK der einzelnen Gerüste ist. Die gerüstspezifischen Walzkraft-Anpassungsglieder KFK werden in diesem Fall selbstverständlich gemäß der Formel

$$KFK := KFK / KFK_m \qquad (9)$$

durch den Mittelwert $KFK_m$ der gerüstspezifischen Anpassungsglieder KFK dividiert.

Die so ermittelten, korrigierten Werte für die Anpassungsglieder KFK, KMK bzw. die Nullpunktkorrektur SO werden vom Sollwertrechner 3 im Speicher 5 abgelegt. Sie stehen daher zur Verfügung, wenn wieder ein Band dieser Qualität gewalzt werden soll. Wenn dieses soeben erwähnte Band derselben Qualität unmittelbar nach dem zuletzt gewalzten Band gewalzt wird, wird gemäß den Formeln

$$F^* = \epsilon \cdot MH \cdot KFK \cdot KMK \qquad (10)$$
$$S^* = HA - CG \cdot F^* + SO - SOT \qquad (11)$$
$$KSK = S - S^* \qquad (12)$$

ein Walzspalt-Anpassungsglied KSK berechnet, mittels dessen eine vollständige Korrektur des beim letzten gewalzten Band aufgetretenen Fehlers zu erwarten ist. In diesem Falle werden vor der Berechnung der Werte KFK, KMK, S und HA die Istwerte der Meßwertreihe jedoch vollständig gemittelt. Wenn ein Band einer anderen Qualität gewalzt wird, wird das Anpassungsglied KSK = 0 gesetzt.

**Patentansprüche**

1. Walzgerüst-Einstellverfahren zur Einstellung von Soll-Walzkraft und Soll-Walzspalt eines Walzgerüstes, bei dem vor dem Walzen eines Bandes (1) einer vorgegebenen Qualität aus einer erwarteten Materialhärte (MH*) und einer aus einem Stichplan gegebenen relativen Soll-Stichabnahme ($\epsilon$*) unter Berücksichtigung von gerüstspezifischen und/oder materialspezifischen Walzkraft-Anpassungsgliedern (KFK, KMK) unter Vereinfachung mittels einer einfachen arithmetischen Verknüpfung, also unter Benutzung nur der vier Grundrechenarten, die Soll-Walzkraft (F*) berechnet wird, sodann aus der durch die relative Soll-Stichabnahme ($\epsilon$*) gegebenen Soll- Auslaufdicke (HA*), dem Gerüstmodul (CG) und der Soll-Walzkraft (F*) unter Berücksichtigung einer Nullpunktkorrektur (SO), einer Temperaturkorrektur (SOT) sowie gegebenenfalls eines Walzspalt-Anpassungsgliedes (KSK) unter Vereinfachung mittels einer einfachen arithmetischen Verknüpfung der Soll- Walzspalt (S*) berechnet wird und das Gerüst (6) mit der Soll- Walzkraft (F*) und dem Soll-Walzspalt (S*) beaufschlagt wird.

2. Verfahren nach Anspruch 1, **dadurch gekennzeichnet,** daß die Soll-Walzkraft (F*) gemäß der Formel

$$F^* = \epsilon^* \cdot MH^* \cdot KFK \cdot KMK$$

berechnet wird.

3. Verfahren nach Anspruch 1 oder 2, **dadurch gekennzeichnet,** daß der Soll-Walzspalt (S*) gemäß der Formel

$$S^* = HA^* - CG \cdot F^* + SO + SOT + KSK$$

berechnet wird.

4. Verfahren nach Anspruch 1, 2 oder 3, **dadurch gekennzeichnet,**
   - daß während des Walzens die Ist-Walzkraft (F), der Ist-Walzspalt (S) und die Ist-Drehzahl (n) des Gerüstes (6) gemessen werden,
   - daß aus der Ist-Drehzahl (n) unter Berücksichtigung der Voreilung (v) die Ist-Auslaufdicke (HA) des Bandes (1) bestimmt wird,
   - daß die Ist-Auslaufdicke (HA) mit der aufgrund des Modells unter Berücksichtigung der Ist-Walzkraft (F) und des Ist-Walzspaltes (S) erwarteten Ist-Auslaufdicke (HA') verglichen wird und
   - daß aufgrund dieses Vergleichs ein Korrekturfaktor für einen der gerüstspezifischen Parameter (CG, SO, SOT), z.B. für die Nullpunktkorrektur (SO), berechnet wird.

5. Verfahren nach Anspruch 1, 2, 3 oder 4, **dadurch gekennzeichnet,**
   - daß während des Walzens die Ist-Walzkraft (F) gemessen wird,
   - daß die Ist-Stichabnahme ($\epsilon$) ermittelt wird,
   - daß aufgrund dieser Ist-Größen (F, $\epsilon$) ein neues gerüstspezifisches Anpassungsglied (KFK') ermittelt wird und
   - durch den Vergleich des neu errechneten Anpassungsgliedes (KFK') mit dem bisher verwendeten Anpassungsglied (KFK) ein Korrekturfaktor für das Anpassungsglied (KFK) ermittelt wird.

6. Verfahren nach Anspruch 4 oder 5, **dadurch gekennzeichnet,** daß die Korrekturfaktoren, gewichtet mit einem Vertrauensfaktor (V), zu den bisherigen Anpassungsgliedern addiert werden, wobei der Vertrauensfaktor (v) umso größer ist, je genauer die Ist-Werte (F, S, n, HA, $\epsilon$) gemessen werden können.

7. Verfahren nach Anspruch 4, 5 oder 6, bei dem unmittelbar nach dem zuletzt gewalzten Band ein Band derselben Qualität gewalzt wird, **dadurch gekennzeichnet,** daß zur Berechnung von Soll-Walzkraft (F*) und Soll-Walzspalt (S*) für dieses Band Anpassungsglieder (KFK, KMK, KSK) ermittelt werden, mittels derer eine vollständige Kompensierung der zuletzt ermittelten Abweichung zwischen Ist-Auslaufdicke (HA) und erwarteter Auslaufdicke (HA') zu erwarten ist.

8. Verfahren nach einem der obigen Ansprüche, **dadurch gekennzeichnet,** daß die Soll-Werte (F*, S*) nur für den Anfang des Bandes (1) vorgegeben werden und die Sollwertvorgabe nach dem Beginn des Walzens von einer Dickenregelung abgelöst wird.

9. Verfahren nach einem der obigen Ansprüche, **dadurch gekennzeichnet,** daß pro Band (1) mehrere Sätze von Meßwerten aufgenommen werden und aus diesen Meßwertsätzen Mittelwerte und Vertrauensintervalle berechnet werden.

10. Verfahren nach Anspruch 9, **dadurch gekennzeichnet,** daß die Berechnung der Mittelwerte und der Vertrauensintervalle gruppenweise erfolgt.

11. Verfahren nach einem der obigen Ansprüche, **dadurch gekennzeichnet,** daß es bei einem mehrgerüstigen Walzwerk, insbesondere einem kontinuierlichen Walzwerk angewendet wird.

## Claims

1. Roll stand adjusting method for adjusting the desired roll force and desired roll gap of a roll stand, in which before rolling a strip (1) of a prescribed quality from an expected material hardness (MH*) and before a relative desired pass reduction ($\epsilon$*) given from a pass schedule the desired roll force (F*) is computed taking account of stand-specific and/or material-specific roll force fitting terms (KFK, KMK) and with simplification by means of a simple arithmetic combination, that is to say using only the four fundamental operations of arithmetic, and then the desired roll gap (S*) is computed, with simplification by means of a simple arithmetic combination, from the desired delivered thickness (HA*) given by the relative desired pass reduction ($\epsilon$*), the stand modulus (CG) and the desired roll force (F*), taking account of a zero-point correction (SO), a temperature correction (SOT), and, as the case may be, a roll gap fitting term (KSK), and the stand (6) is subjected to the desired roll force (F*) and the desired roll gap (S*).

2. Method according to Claim 1, characterised in that the desired roll force (F*) is computed in accordance with the formula

$$F^* = \epsilon^* \cdot MH^* \cdot KFK \cdot KMK$$

3. Method according to Claim 1 or 2, characterised in that the desired roll gap (S*) is computed in accordance with the formula

$$S^* = HA^* - CG \cdot F^* + SO + SOT + KSK$$

4. Method according to Claim 1, 2 or 3, characterised in that
   - during rolling the actual roll force (F), the actual roll gap (S) and the actual rotational speed (n) of the stand (6) are measured,
   - the actual delivered thickness (HA) of the strip (1) is determined from the actual rotational speed (n) taking account of the forward slip (v),
   - the actual delivered thickness (HA) is compared with the actual delivered thickness (HA') expected on the basis of the model taking account of the actual roll force (F) and the actual roll gap (S), and
   - on the basis of this comparison a correction factor is computed for one of the stand-specific parameters (CG, SO, SOT), for example for the zero-point correction (SO).

5. Method according to Claim 1, 2, 3 or 4, characterised in that
   - during rolling the actual roll force (F) is measured,
   - the actual pass reduction ($\epsilon$) is determined,
   - on the basis of these actual quantities (F, $\epsilon$) a new stand-specific fitting term (KFK') is determined, and
   - a correction factor is determined for the fitting term (KFK) by means of the comparison of the newly calculated fitting term (KFK') with the previously used fitting term (KFK).

6. Method according to Claim 4 or 5, characterised in that the correction factors, weighted with a confidence factor (V), are added to the previous fitting terms, the confidence factor (V) being larger the more precisely it is possible to measure the actual values (F, S, n, HA, $\epsilon$).

7. Method according to Claim 4, 5 or 6, in which directly after the last-rolled strip a strip of the same quality is rolled, characterised in that in order to compute the desired roll force (F*) and desired roll gap (S*) for this strip fitting terms (KFK, KMK, KSK) are determined by means of which a complete compensation of the deviation last determined between the actual delivered thickness (HA) and expected delivered thickness (HA') is to be expected.

8. Method according to one of the above claims, characterised in that the desired values (F*, S*) are stipulated only for the start of the strip (1), and the desired value stipulation is replaced after the start of rolling by thickness control.

9. Method according to one of the above claims, characterised in that a plurality of sets of measured values are recorded per strip (1), and mean values and confidence intervals are computed from these measured value sets.

10. Method according to Claim 9, characterised in that the computation of the mean values and of the confidence intervals is performed in groups.

**11.** Method according to one of the above claims, characterised in that it is applied in a multi-stand rolling mill, preferably in a continuous rolling mill.

## Revendications

**1.** Procédé de réglage d'une cage de laminage pour régler la force de laminage prescrite et l'emprise de laminage prescrite d'une cage de laminage, selon lequel on calcule avant de laminer une bande (1) d'une qualité donnée, à partir d'une dureté de matière escomptée (MH*) et d'une réduction de passes relative prescrite ($\epsilon$*) donnée par un plan de passes, en tenant compte d'éléments d'adaptation pour la force de laminage (KFK, KMK) spécifiques à la cage et/ou spécifiques à la matière, en simplifiant par une simple composition arithmétique, donc en utilisant seulement les quatre opérations élémentaires, la force de laminage prescrite (F*), selon lequel on calcule ensuite, à partir de l'épaisseur de sortie prescrite (HA*) donnée par la réduction de passes relative prescrite ($\epsilon$*), du module de cage (CG) et de la force de laminage prescrite (F*), en tenant compte d'une compensation de décalage de zéro (SO), d'une correction de température (SOT) ainsi que, le cas échéant, d'un élément d'adaptation pour l'emprise de laminage (KSK), en simplifiant par une simple composition arithmétique, l'emprise de laminage prescrite (S*), et selon lequel on applique la force de laminage prescrite ((F*) et l'emprise de laminage prescrite (S*) à la cage (6).

**2.** Procédé selon la revendication 1, caractérisé en ce que l'on calcule la force de laminage prescrite (F*) selon la formule

$$F^* = \epsilon^* \cdot MH^* \cdot KFK \cdot KMK.$$

**3.** Procédé selon l'une quelconque des revendications 1 ou 2, caractérisé en ce que l'on calcule l'emprise de laminage prescrite (S*) selon la formule

$$S^* = HA^* - CG \cdot F^* + SO + SOT + KSK.$$

**4.** Procédé selon l'une quelconque des revendications 1, 2 ou 3, caractérisé en ce que
   - on calcule pendant le laminage la force de laminage effective (F), l'emprise de laminage effective (S) et la vitesse de rotation effective (n) de la cage (6),
   - on détermine à partir de la vitesse de rotation effective (n), en tenant compte de l'avance (v), l'épaisseur de sortie effective (HA) de la bande (1),
   - on compare l'épaisseur de sortie effective (HA) avec l'épaisseur de sortie escomptée (HA') en raison du modèle, en tenant compte de la force de laminage effective (F) et de l'emprise de laminage effective (S), et
   - on calcule sur la base de cette comparaison un facteur de correction pour l'un des paramètres spécifiques à la cage (CG, SO, SOT), par exemple pour la compensation de décalage de zéro (SO).

**5.** Procédé selon l'une quelconque des revendications 1, 2, 3 ou 4, caractérisé en ce que
   - on calcule pendant le laminage la force de laminage effective (F),
   - on détermine la réduction de passes effective ($\epsilon$),
   - on détermine sur la base des ces grandeurs effectives (F, $\epsilon$) un nouvel élément d'adaptation spécifique à la cage (KFK'), et
   - on détermine en comparant l'élément d'adaptation nouvellement calculé (KFK') avec l'élément d'adaptation utilisé jusqu'alors (KFK), un facteur de correction pour l'élément d'adaptation (KFK).

**6.** Procédé selon l'une quelconque des revendications 4 ou 5, caractérisé en ce que les facteurs de correction pondérés par un facteur de confiance (V), sont additionnés aux éléments d'adaptation utilisés jusqu' alors, le facteur de confiance (V) étant d'autant plus grand que les valeurs effectives (F, S, n, HA, $\epsilon$) peuvent être mesurées avec précision.

**7.** Procédé selon l'une quelconque des revendications 4, 5 ou 6, selon lequel on lamine aussitôt après la bande laminée en dernier, une autre bande de la même qualité, caractérisé en ce qu'on détermine pour le calcul de la force de laminage prescrite (F*) et de l'emprise de laminage prescrite (S*) pour cette bande, des éléments d'adaptation (KFK, KMK, KSK), au moyen desquels une compensation totale de l'écart déterminé en dernier entre épaisseur de sortie effective (HA) et épaisseur de sortie escomptée (HA') peut être escomptée.

**8.** Procédé selon l'une quelconque des revendications précédentes, caractérisé en ce que les valeurs prescrites (F*, S*) ne sont données que pour le début de la bande (1) et en ce que les valeurs prescrites sont remplacées après le début du laminage par un réglage d'épaisseur.

9. Procédé selon l'une quelconque des revendications précédentes, caractérisé en ce qu'on enregistre par bande (1) plusieurs groupes de valeurs de mesure et on calcule à partir de ces groupes de valeurs de mesure des valeurs moyennes et des intervalles de confiance.

10. Procédé selon la revendication 9, caractérisé en ce que le calcul des valeurs moyennes et des intervalles de confiance s'effectue par groupe.

11. Procédé selon l'une quelconque des revendications précédentes, caractérisé en ce qu'on l'utilise dans le cas d'un laminoir à plusieurs cages, en particulier d'un laminoir continu.

FIG 1

FIG 2